# EUROPEAN PATENT SPECIFICATION

(11) **EP 2 710 084 B1**
(45) Date of publication and mention of the grant of the patent: **28.10.2020**
(21) Application number: 12789359.2
(22) Date of filing: 16.05.2012
(51) Int. Cl.: C09J 7/00

(54) **PROCESSING TAPES FOR PREPARING LAMINATE ARTICLES**
VERARBEITUNG VON BÄNDERN ZUR HERSTELLUNG BESCHICHTETER GEGENSTÄNDE
BANDES DE TRAITEMENT POUR LA PRÉPARATION D'ARTICLES STRATIFIÉS

(30) Priority: 20.05.2011 US 201161488200 P
(43) Date of publication of application: 26.03.2014
(73) Proprietor: 3M Innovative Properties Company, St. Paul, MN 55133-3427 (US)
(72) Inventor: CHEN-HO, Kui, Saint Paul, MN 55133-3427 (US); HAAS, Christopher, K., Saint Paul, MN 55133-3427 (US); FANSLER, Duane, D., Saint Paul, MN 55133-3427 (US); XIA, Jianhui, Saint Paul, MN 55133-3427 (US); ZHU, Dong-Wei, Saint Paul, MN 55133-3427 (US); FILIATRAULT, Timothy, D., Saint Paul, MN 55133-3427 (US)
(74) Representative: Lotaut, Yacine Diaw
(86) International application number: PCT/US2012/038100
(87) International publication number: WO 2012/162053

(56) References cited:
- EP-B1- 0 372 756
- EP-B1- 0 372 756
- JP-A- H0 790 028
- US-A- 4 728 571
- US-A- 5 591 527
- US-A- 5 591 527

## Description

### Field of the Disclosure

The present disclosure relates generally to the field of adhesives and tapes, specifically to the field of pressure sensitive adhesive tapes useful as processing tapes for forming laminate articles.

### Background

Adhesives have been used for a variety of marking, holding, protecting, sealing and masking purposes. Adhesive tapes generally comprise a backing, or substrate, and an adhesive. One type of adhesive, a pressure sensitive adhesive, is particularly useful for many applications. Pressure sensitive adhesives are well known to one of ordinary skill in the art to possess certain properties at room temperature including the following: (1) aggressive and permanent tack at room temperature, (2) adherence with no more than finger pressure, (3) sufficient ability to hold onto an adherend, and (4) sufficient cohesive strength to be removed cleanly from the adherend. Materials that have been found to function well as pressure sensitive adhesives are polymers designed and formulated to exhibit the requisite viscoelastic properties resulting in a desired balance of tack, peel adhesion, and shear strength. The most commonly used polymers for preparation of pressure sensitive adhesives are natural rubber, synthetic rubbers (e.g., styrene/butadiene copolymers (SBR) and styrene/isoprene/styrene (SIS) block copolymers), various (meth)acrylate (e.g., acrylate and methacrylate) copolymers and silicones. Each of these classes of materials has advantages and disadvantages.

One class of pressure sensitive adhesive polymeric materials are (meth)acrylate polymers. These polymers contain acrylate and/or methacrylate monomers and may also contain reinforcing monomers such as, for example, (meth)acrylic acid. Many patents and publications describe the preparation of these polymers and pressure sensitive adhesive articles made from them, including, for example, US Patent No. RE 24,906 (Ulrich) which concerns pressure sensitive adhesive copolymer of about 88-97 parts of acrylic acid ester of non-tertiary alcohol, the alkyl groups of which have an average of 4-12 carbon atoms in the alkyl group, and correspondingly about 12-3 parts by weight of at least one modifying copolymerizable monomer such as acrylic acid, itaconic acid or acrylamide. A tape coated with the copolymer exhibits excellent adhesion and holding power, and the adhesive coating experiences no observable deterioration even after the tape has been stored for a number of years. Such tapes are widely used for a variety of purposes.

Pressure sensitive adhesive tapes that are used in the manufacture of articles to protect or temporarily hold in place components of the article during processing are sometimes called processing tapes. Examples of processing tapes include, for example, wafer dicing tapes, where the dicing tape may also function as a die attach adhesive for dicing thinned wafers and subsequent die attach operations of the diced chips in semiconductor device fabrication. Another example of a processing tape is a masking tape, where the masking tape is applied to a surface to cover it and protect it from being painted, the paint is applied, and the masking tape is removed to give a surface with adjacent areas that are painted and unpainted. Typically the processing tape is not retained in the final article, but is removed following one or more processing steps. In some instances, processing tapes are subjected to extreme conditions such as high temperatures, high pressures, exposure to chemicals such as solvents, abrasives, etching materials, and the like and yet are expected to remain adhered during the processing steps without flowing, dripping or slipping and also to be removable after the processing steps are completed.

### Summary

Disclosed herein are tapes designed with special properties to permit them to be used to prepare laminate articles, such as security articles. Also disclosed are methods of using the tapes to prepare laminate articles such as security articles. In some embodiments, the tape comprises a dimensionally stable transparent polymeric film, with at least one treated surface, a transparent pressure sensitive adhesive layer at least partially coated on the treated surface of the dimensionally stable transparent polymeric film, and a release surface covering the transparent pressure sensitive adhesive layer. The pressure sensitive adhesive layer comprises a crosslinked (meth)acrylate-based polymer comprising 95-99.5% alkyl (meth)acrylate monomers and 0.5-5% acidic monomers. The transparent pressure sensitive adhesive layer has a refractive index in the range of 1.45-1.55.

In other embodiments, the tape comprises a dimensionally stable transparent polymeric film, a transparent pressure sensitive adhesive layer at least partially coated on the dimensionally stable transparent polymeric film, and a release surface covering the transparent pressure sensitive adhesive layer. The transparent pressure sensitive adhesive layer comprises a crosslinked (meth)acrylate-based polymer comprising 95-100% alkyl (meth)acrylate monomers and 0-5% acidic monomers. The transparent pressure sensitive adhesive layer has a refractive index in the range of 1.45-1.55.

Also disclosed are methods for preparing laminate articles such as security articles. In some embodiments, the methods comprise preparing a laminate between a tape and the microstructured surface of an article, the article having a microstructured surface and a reverse surface. The reverse surface of this laminate can then be laminated to a multi-layer substrate at an elevated temperature and pressure to form a security article. Additional processing steps such as die cutting of the formed security article, personalizing the formed security article, and removal of the tape, can then be carried out. The preparing of a laminate comprises providing an article with a microstructured surface, providing a tape with a release layer covering the pressure sensitive adhesive layer, removing the release layer and laminating the tape to the microstructured surface at room temperature. The tape comprises a dimensionally stable transparent polymeric film with at least one treated surface, a transparent pressure sensitive adhesive layer at least partially coated on the treated surface of the dimensionally stable transparent polymeric film, and a release surface covering the transparent pressure sensitive adhesive layer. The transparent pressure sensitive adhesive layer comprises a crosslinked (meth)acrylate-based polymer comprising 95-99.5% alkyl (meth)acrylate monomers and 0.5-5% acidic monomers. The transparent pressure sensitive adhesive layer has a refractive index in the range of 1.45-1.55. The tape is prepared by providing a dimensionally stable transparent polymeric film, treating at least one surface of the dimensionally stable transparent polymeric film and contacting the treated surface with a pressure sensitive adhesive layer. The pressure sensitive adhesive layer is prepared by providing a pressure sensitive adhesive solvent-borne composition, coating the pressure sensitive adhesive solvent-borne composition on a release surface, and removing the solvent from the pressure sensitive adhesive coating.

In other embodiments of the methods for preparing laminate articles such as security articles, the methods comprise preparing a laminate between a tape and the microstructured surface of an article, the article having a microstructured surface and a reverse surface. The reverse surface of this laminate can then be laminated to a multi-layer substrate at an elevated temperature and pressure to form a security article. Additional processing steps such as die cutting of the formed security article, personalizing the formed security article, and removing the tape, can then be carried out. The preparing of a laminate comprises providing an article with a microstructured surface, providing a tape with a release layer covering the pressure sensitive adhesive layer, removing the release layer and laminating the tape to the microstructured surface at room temperature. The tape comprises a dimensionally stable transparent polymeric film, a transparent pressure sensitive adhesive layer at least partially coated on the dimensionally stable transparent polymeric film, and a release surface covering the transparent pressure sensitive adhesive layer. The transparent pressure sensitive adhesive layer comprises a crosslinked (meth)acrylate-based polymer comprising 95-100% alkyl (meth)acrylate monomers and 0-5% acidic monomers. The transparent pressure sensitive adhesive layer has a refractive index in the range of 1.45-1.55. The tape is prepared by providing a dimensionally stable transparent polymeric film, coating an adhesive precursor mixture on the dimensionally stable transparent polymeric film, applying a release surface to the adhesive layer, and curing the adhesive precursor mixture to form a transparent pressure sensitive adhesive layer.

### Brief Description of the Drawings

The present application may be more completely understood in consideration of the following detailed description of various embodiments of the disclosure in connection with the accompanying drawings.
Figure 1 is an enlarged cross sectional view of a microlens sheeting comprising a plano-convex base sheet.
Figure 2 is an enlarged cross sectional view of an "exposed lens" microlens sheeting.
Figure 3 is an enlarged cross sectional view of an embodiment of a processing tape of this disclosure laminated to microlens sheeting.
Figure 4 is an enlarged cross sectional view of an embodiment of a processing tape of this disclosure laminated to a laser-personalizable security article.
Figure 5 is an enlarged cross sectional view of the removal of an embodiment of a processing tape of the present disclosure from a laser-personalized security article.

In the following description of the illustrated embodiments, reference is made to the accompanying drawings, in which is shown by way of illustration, various embodiments in which the disclosure may be practiced. It is to be understood that the embodiments may be utilized and structural changes may be made without departing from the scope of the present disclosure. The figures are not necessarily to scale. Like numbers used in the figures refer to like components. However, it will be understood that the use of a number to refer to a component in a given figure is not intended to limit the component in another figure labeled with the same number.

### Detailed Description

The use of adhesive tapes, especially pressure sensitive adhesive tapes, is increasing. Among the areas in which the use of adhesive tapes is increasing are the medical, electronic and optical industries, as well as the manufacture of consumer goods and other articles, including security documents. The requirements of these industries require adhesive tapes with specialized features. For example, adhesive tapes, such as pressure sensitive adhesive tapes, are needed that provide additional features beyond the traditional tape properties of tack, peel adhesion and shear strength.

Among the class of pressure sensitive adhesive tapes that require specialized properties are processing tapes. Processing tapes are pressure sensitive adhesive tapes that are used in the manufacture of articles to protect or temporarily hold in place components of the article during processing. Examples of processing tapes are described above.

The processing tapes of this disclosure are suitable for use in the preparation of security articles. Examples of security articles include identification documents (ID documents) and security documents. The term "ID documents" is broadly defined and is intended to include, but not be limited to, for example, passports, driver's licenses, national ID cards, social security cards, voter registration and/or identification cards, birth certificates, police ID cards, border crossing cards, security clearance badges, security cards, visas, immigration documentation and cards, gun permits, membership cards, phone cards, stored value cards, employee badges, debit cards, credit cards, and gift certificates and cards. ID documents are also sometimes referred to as "security documents". The articles of this disclosure may be the ID document or may be part of the ID document. Other articles may be described as security documents, and typically contain color images and include items of value, such as, for example, currency, bank notes, checks, and stock certificates, where authenticity of the item is important to protect against counterfeiting or fraud, as well as articles which can be used to produce informative, decorative, or recognizable marks or indicia on product tags, product packaging, labels, charts, maps and the like.

The processing tapes useful for the preparation of security articles have a broad range of desired properties, some of which are contradictory properties. For example, since, as will be described more thoroughly below, it is desirable that the pressure sensitive adhesive layer of the tape wet out the microstructured surface to which it is applied, it is desirable that the pressure sensitive adhesive be soft and conformable. However, soft and conformable pressure sensitive adhesives are not desirable for other processing steps. For example, soft and conformable pressure sensitive adhesive layers are likely to flow or ooze when subjected to elevated temperatures and pressures and die cutting, which is undesirable or even unacceptable in this application.

Among the properties desired for the pressure sensitive adhesives of the processing tapes of this disclosure, besides the normal pressure sensitive adhesive properties of peel strength, shear holding power and tack, are optical properties, wet out properties, and thermal stability properties. Desired optical properties include optical transparency and a useful refractive index. Typically, it is desired that the refractive index matches closely (for example within 0.05) of the refractive index of the microstructured surface to which it is adhered. In some embodiments the refractive index of the pressure sensitive adhesive is in the range of 1.45-1.55. In some specific embodiments, the refractive index is 1.50. This matching of refractive indices is desirable so that when the tape is applied to the microstructured surface the adhesive will cause the microstructures to be rendered invisible to a writing laser. A mismatch of refractive indices can result in an undesirable optical effect, namely that the microstructures will not be rendered invisible to a writing laser.

Also desirable for the processing tapes of the present disclosure are pressure sensitive adhesives with useful wet out properties. Specifically, the ability to wet out the microstructured surface to which it is applied, is very desirable. If the pressure sensitive adhesive does not adequately wet out the microstructured surface to which it is applied, the efforts to select a pressure sensitive with the proper refractive index to match with that of the microstructured surface are in vain. Improper wet out will result in an undesirable optical effect, namely that the microstructures will not be rendered invisible to a writing laser.

Thermal stability to withstand elevated temperature processes without flowing, oozing or becoming non-removable from the microstructured surface to which it is adhered, is desirable for the processing tapes of this disclosure.

Unless otherwise indicated, all numbers expressing feature sizes, amounts, and physical properties used in the specification and claims are to be understood as being modified in all instances by the term "about." Accordingly, unless indicated to the contrary, the numerical parameters set forth in the foregoing specification and attached claims are approximations that can vary depending upon the desired properties sought to be obtained by those skilled in the art utilizing the teachings disclosed herein. The recitation of numerical ranges by endpoints includes all numbers subsumed within that range (e.g. 1 to 5 includes 1, 1.5, 2, 2.75, 3, 3.80, 4, and 5) and any range within that range.

As used in this specification and the appended claims, the singular forms "a", "an", and "the" encompass embodiments having plural referents, unless the content clearly dictates otherwise. For example, reference to "a layer" encompasses embodiments having one, two or more layers. As used in this specification and the appended claims, the term "or" is generally employed in its sense including "and/or" unless the content clearly dictates otherwise.

The term "adhesive" as used herein refers to polymeric compositions useful to adhere together two adherends. Examples of adhesives are pressure sensitive adhesives.

Pressure sensitive adhesive compositions are well known to those of ordinary skill in the art to possess properties including the following: (1) aggressive and permanent tack at room temperature, (2) adherence with no more than finger pressure, (3) sufficient ability to hold onto an adherend, and (4) sufficient cohesive strength to be cleanly removable from the adherend. Materials that have been found to function well as pressure sensitive adhesives are polymers designed and formulated to exhibit the requisite viscoelastic properties resulting in a desired balance of tack, peel adhesion, and shear holding power. Obtaining the proper balance of properties is not a simple process.

Unless otherwise indicated, the terms "transparent' and "optically transparent" are used interchangeably and refer to an article, film or adhesive that has a high light transmittance over at least a portion of the visible light spectrum (about 400 to about 700 nm). The term "transparent film" refers to a film having a thickness and when the film is disposed on a substrate, an image (disposed on or adjacent to the substrate) is visible through the thickness of the transparent film. In many embodiments, a transparent film allows the image to be seen through the thickness of the film without substantial loss of image clarity. In some embodiments, the transparent film has a matte or glossy finish.

The term "(meth)acrylate" refers to monomeric acrylic or methacrylic esters of alcohols. Acrylate and methacrylate monomers or oligomers are referred to collectively herein as "(meth)acrylates". The term "(meth)acrylate-based" when used to describe polymers, refers to polymers that are prepared from (meth)acrylate monomers. These polymers may contain only (meth)acrylate monomers or they contain monomers that are co-reactive with (meth)acrylates.

As used herein, the term "polymer" refers to a polymeric material that is a homopolymer or a copolymer. As used herein, the term "homopolymer" refers to a polymeric material that is the reaction product of one monomer. As used herein, the term "copolymer" refers to a polymeric material that is the reaction product of at least two different monomers.

The terms "tackifying resin", "tackifying agent" and "tackifier" are used interchangeably herein.

The terms "plasticizing resin", "plasticizing agent" and "plasticizer" are used interchangeably herein.

The term "alkyl" refers to a monovalent group that is a radical of an alkane, which is a saturated hydrocarbon. The alkyl can be linear, branched, cyclic, or combinations thereof and typically has 1 to 20 carbon atoms. In some embodiments, the alkyl group contains 1 to 18, 1 to 12, 1 to 10, 1 to 8, 1 to 6, or 1 to 4 carbon atoms. Examples of alkyl groups include, but are not limited to, methyl, ethyl, n-propyl, isopropyl, n-butyl, isobutyl, tert-butyl, n-pentyl, n-hexyl, cyclohexyl, n-heptyl, n-octyl, and ethylhexyl.

As used herein, the term "wet out" when referring to an adhesive layer refers to the ability of the adhesive to spread out upon and bond to the contact surface.

As used herein, the term "microstructure" means the configuration of features wherein at least 2 dimensions of the features are microscopic. The topical and/or cross-sectional view of the features must be microscopic.

As used herein, the term "microscopic" refers to features of small enough dimension so as to require an optic aid to the naked eye when viewed from any plane of view to determine its shape. One criterion is found in Modern Optic Engineering by W. J. Smith, McGraw-Hill, 1966, pages 104-105 whereby visual acuity, "... is defined and measured in terms of the angular size of the smallest character that can be recognized." Normal visual acuity is considered to be when the smallest recognizable letter subtends an angular height of 5 minutes of arc on the retina. At typical working distance of 250 mm (10 inches), this yields a lateral dimension of 0.36 mm (0.0145 inch) for this object.

In some embodiments, the tapes of this disclosure comprise a dimensionally stable transparent polymeric film, with at least one treated surface and a transparent pressure sensitive adhesive coated on at least a portion of the treated surface of the dimensionally stable transparent polymeric film. The transparent pressure sensitive adhesive layer comprises a crosslinked (meth)acrylate-based polymer comprising 95-99.5% alkyl (meth)acrylate monomers and 0.5-5% acidic monomers. The transparent pressure sensitive adhesive layer has a refractive index in the range of 1.45-1.55.

A variety of polymeric films are suitable for use as the dimensionally stable transparent polymeric film. The term "dimensionally stable" as used herein, when referring to materials or films, means that the film or material has the ability to maintain its essential or original dimensions while being used for its intended purpose, without shrinking or stretching.

In some embodiments, the dimensionally stable transparent polymeric film comprises a polycarbonate film. Addition dimensionally stable films include certain polyesters such as annealed polyethylene terephthalate (PET), amorphous co-polyesters such as those commercially available from Eastman Chemicals as "TRITAN". In some embodiments polycarbonate films are particularly useful. Examples of suitable polycarbonate films include those sold by Sabic as "LEXAN" or those sold by Bayer as "MAKROFOL", or those commercially available from 3M Company as "3M Polycarbonate Security Films".

In some embodiments, the dimensionally stable transparent polymeric film has at least one treated surface. A wide range of surface treatments are suitable to help improve the adhesion of the pressure sensitive adhesive layer to the dimensionally stable transparent polymeric film. The surface treatments may be physical surface treatments, chemical surface treatments, or a combination of physical and chemical surface treatments.

Examples of suitable physical surface treatments include, for example, corona treatment, plasma treatment and flame treatment, with corona treatment being particularly suitable. These techniques are well known in the film arts to provide a modified surface.

Examples of suitable chemical surface treatments include, for example, the application of a primer. Primers are known surface treatment agents that can be applied to a film surface to provide a chemically modified surface. The applied pressure sensitive adhesive layer forms a stronger bond to this chemically modified surface than it would to the surface without the primer present.

Among the suitable primers for use to modify a surface of a dimensionally stable transparent polymeric film are aqueous primers. Aqueous primers are those in which the primer materials are dissolved or suspended in water. Aqueous primers are particularly suitable because solvent-based primers could partially dissolve the film surface causing dimensional changes, structural changes or optical changes, that is to say, the films could become thinner, weaker or opaque. Aqueous primers, however have not been found to cause these undesirable changes in the film, especially chemically sensitive films such as polycarbonate. Particularly suitable aqueous primers include aqueous primers that include a mixture of silica and organosilanes. Such primers are described in, for example, in European Patent No. EP 372,756.

The primer may be applied to the film surface using any suitable coating technique. For example, the primer can be coated by such methods as knife coating, roll coating, gravure coating, rod coating, spray coating, curtain coating, and air knife coating. The primer may also be printed by known methods such as screen printing or inkjet printing. The coated aqueous primer layer is then dried to remove the water and any additional water-miscible co-solvents that might be present. Typically, the coated primer layer is subjected to elevated temperatures, such as those supplied by an oven, to expedite drying of the primer layer.

In some embodiments, it may be desirable to use a combination of surface treatments. For example, the dimensionally stable transparent polymeric film may be subjected to corona treatment and then have an aqueous primer applied to the surface.

The tapes of this disclosure also comprise a transparent pressure sensitive adhesive layer. This transparent pressure sensitive adhesive layer comprises a crosslinked (meth)acrylate-based polymer. Depending upon the method of delivery of the pressure sensitive adhesive layer, the composition of the pressure sensitive adhesive layer may be somewhat different. In some embodiments, typically embodiments in which the pressure sensitive adhesive layer is formed by coating a solvent-borne pressure sensitive adhesive matrix, the pressure sensitive adhesive layer comprises a small amount of reinforcing co-monomers in the form of an acidic co-monomer or other monomer capable of hydrogen bonding. In other embodiments, typically embodiments in which the pressure sensitive adhesive layer is formed by a coat and cure process, the pressure sensitive adhesive layer may be free of acidic co-monomers.

In some embodiments, the pressure sensitive adhesive layer is formed by indirectly coating on the dimensionally stable transparent polymeric film a solvent-borne adhesive. These solvent-borne adhesives typically contain a small amount reinforcing acidic co-monomer. The reinforcing co-monomer can increase the adhesive and cohesive strength of the resulting pressure sensitive adhesive, or the acidic groups can interact with surface functional groups on the dimensionally stable transparent polymeric film surface to increase the adhesion of the pressure sensitive adhesive to the film surface. Additionally, the acidic comonomer provides reactive functionality with which to chemically crosslink the polymer.

To achieve pressure sensitive adhesive characteristics, the corresponding copolymer can be tailored to have a resultant glass transition temperature (Tg) of less than about 0°C. Such copolymers typically are derived from monomers comprising 95 to 99.5% by weight of at least one alkyl (meth)acrylate monomer that, as a homopolymer, has a Tg of less than about 0°C.

Examples of such alkyl (meth)acrylate monomers are those in which the alkyl groups comprise from about 4 carbon atoms to about 12 carbon atoms and include, but are not limited to, n-butyl acrylate, 2-ethylhexyl acrylate, isooctyl acrylate, isononyl acrylate, isodecyl, acrylate, and mixtures thereof. Optionally, other vinyl monomers and alkyl (meth)acrylate monomers which, as homopolymers, have a Tg greater than 0°C, such as methyl acrylate, methyl methacrylate, isobornyl acrylate, vinyl acetate, styrene, and the like, may be utilized in conjunction with one or more of the low Tg alkyl (meth)acrylate monomers and copolymerizable basic or acidic monomers, provided that the Tg of the resultant (meth)acrylate copolymer is less than about 0°C. Additionally, renewable (meth)acrylate monomers such as are described in US Patent No. 7,385,020 (Anderson et al.) are suitable.

In some embodiments, the pressure sensitive adhesive matrix also comprises acidic co-monomers comprising about 0.5% to about 5% by weight. The acidic co-monomers are co-polymerizable with the (meth)acrylate monomers. Examples of suitable acidic monomers include ethylenically unsaturated carboxylic acids, ethylenically unsaturated sulfonic acids, ethylenically unsaturated phosphonic acids and mixtures thereof. Examples of such compounds include those selected from acrylic acid, methacrylic acid, itaconic acid, fumaric acid, crotonic acid, citraconic acid, maleic acid, oleic acid, B-carboxyethyl acrylate, 2-sulfoethyl methacrylate, styrene sulfonic acid, 2-acrylamido-2-methylpropane sulfonic acid, vinyl phosphonic acid, and the like, and mixtures thereof. Due to their availability, typically ethylenically unsaturated carboxylic acids are used.

In certain embodiments, the poly(meth)acrylic pressure sensitive adhesive matrix is derived from between about 0.5% to about 5% by weight of acrylic acid and between about 99.5% and about 95% by weight of at least one of isooctyl acrylate or 2-ethyl-hexyl acrylate composition.

The pressure sensitive adhesive may be inherently tacky. If desired, tackifiers may be added to a base material to form the pressure sensitive adhesive. Useful tackifiers include, for example, rosin ester resins, aromatic hydrocarbon resins, aliphatic hydrocarbon resins, and terpene resins. Other materials can be added for special purposes, including, for example, oils, plasticizers, antioxidants, ultraviolet ("UV") stabilizers, hydrogenated butyl rubber, pigments, curing agents, polymer additives, thickening agents, chain transfer agents and other additives provided that they do not reduce the optical clarity of the pressure sensitive adhesive.

The (meth)acrylate pressure sensitive adhesive matrix is crosslinked. This crosslinking is achieved through the use of a co-polymerizable crosslinking agent. The choice of crosslinking agent depends upon the nature of polymer or copolymer which one wishes to crosslink. The crosslinking agent is used in an effective amount, by which is meant an amount that is sufficient to cause crosslinking of the pressure sensitive adhesive to provide adequate cohesive strength to produce the desired final adhesion properties to the substrate of interest. Generally, when used, the crosslinking agent is used in an amount of about 0.1 part to about 10 parts by weight, based on the total amount of monomers, more typically from 0.3-0.75% by weight crosslinker is used.

One class of useful crosslinking agents include multifunctional (meth)acrylate species. Multifunctional (meth)acrylates include tri(meth)acrylates and di(meth)acrylates (that is, compounds comprising three or two (meth)acrylate groups). Typically di(meth)acrylate crosslinkers (that is, compounds comprising two (meth)acrylate groups) are used. Useful tri(meth)acrylates include, for example, trimethylolpropane tri(meth)acrylate, propoxylated trimethylolpropane triacrylates, ethoxylated trimethylolpropane triacrylates, tris(2-hydroxy ethyl)isocyanurate triacrylate, and pentaerythritol triacrylate. Useful di(meth)acrylates include, for example, ethylene glycol di(meth)acrylate, diethylene glycol di(meth)acrylate, triethylene glycol di(meth)acrylate, tetraethylene glycol di(meth)acrylate, 1,4-butanediol di(meth)acrylate, 1,6-hexanediol di(meth)acrylate, alkoxylated 1,6-hexanediol diacrylates, tripropylene glycol diacrylate, dipropylene glycol diacrylate, cyclohexane dimethanol di(meth)acrylate, alkoxylated cyclohexane dimethanol diacrylates, ethoxylated bisphenol A di(meth)acrylates, neopentyl glycol diacrylate, polyethylene glycol di(meth)acrylates, polypropylene glycol di(meth)acrylates, and urethane di(meth)acrylates.

Another useful class of crosslinking agents contain functionality which are reactive with carboxylic acid groups on the acrylic copolymer. Examples of such crosslinkers include multifunctional aziridine, isocyanate and epoxy compounds. Examples of aziridine-type crosslinkers include, for example 1,4-bis(ethyleneiminocarbonylamino)benzene, 4,4'-bis(ethyleneiminocarbonylamino)diphenylmethane, 1,8-bis(ethyleneiminocarbonylamino)octane, and 1,1'-(1,3-phenylene dicarbonyl)-bis-(2-methylaziridine). The aziridine crosslinker 1,1'-(1,3-phenylene dicarbonyl)-bis-(2-methylaziridine) (CAS No. 7652-64-4), referred to herein as "Bisamide" is particularly useful. Common polyfunctional isocyanate crosslinkers include, for example, trimethylolpropane toluene diisocyanate, tolylene diisocyanate, and hexamethylene diisocyanate.

The transparent pressure sensitive adhesive matrix generally has a refractive index which is designed to approximate the refractive index of the dimensionally stable transparent polymeric film. Typically the pressure sensitive adhesive matrix has a refractive index in the range of about 1.45-1.55.

In other embodiments of tapes of this disclosure, the pressure sensitive adhesive layer is formed by a coat and cure process, and the pressure sensitive adhesive layer may be free of acidic co-monomers. In these embodiments, the transparent pressure sensitive adhesive layer comprises a crosslinked (meth)acrylate-based polymer comprising 95-100% alkyl (meth)acrylate monomers and 0-5% acidic monomers. The transparent pressure sensitive adhesive layer has a refractive index in the range of 1.45-1.55. The same alkyl (meth)acrylate monomers, optional acidic co-monomers, and crosslinking agents as described above can be used. The level of crosslinking agent present in these pressure sensitive adhesives may be in the range 0.3-1.0% by weight.

As mentioned above, the pressure sensitive adhesive layer may be formed by indirect coating of a solvent-borne pressure sensitive adhesive composition or by a coat and cure process. For the embodiments that involve coating of a solvent-borne pressure sensitive adhesive composition, a pressure sensitive adhesive composition is prepared in solvent or dissolved in solvent.

The transparent pressure sensitive adhesive composition may be prepared by any conventional polymerization technique useful to prepare such adhesives. The adhesive composition is a (meth)acrylate copolymer, and the copolymers can be prepared by any conventional free radical polymerization method, including solution, radiation, bulk, dispersion, emulsion, and suspension processes. In one solution polymerization method, the monomers, along with a suitable inert organic solvent, are charged into a four-neck reaction vessel that is equipped with a stirrer, a thermometer, a condenser, an addition funnel, and a temperature controller.

A concentrated thermal free radical initiator solution is added to the addition funnel. The whole reaction vessel, addition funnel, and their contents are then purged with nitrogen to create an inert atmosphere. Once purged, the solution within the vessel is heated to an appropriate temperature to activate the free radical initiator to be added, the initiator is added, and the mixture is stirred during the course of the reaction. A 98% to 99% conversion can typically be obtained in about 20 hours.

Bulk polymerization methods, such as the continuous free radical polymerization method described by Kotnour et al. in U.S. Pat. Nos. 4,619,979 and 4,843,134; the essentially adiabatic polymerization methods using a batch reactor described by Ellis in U.S. Pat. No. 5,637,646; suspension polymerization processes described by Young et al. in U.S. Pat. No. 4,833,179; and, the methods described for polymerizing packaged pre-adhesive compositions described by Hamer et al. in PCT Publication No. WO 97/33945 may also be utilized to prepare the polymers.

Suitable thermal free radical initiators which may be utilized include, but are not limited to, those selected from azo compounds, such as 2,2'-azobis(isobutyronitrile); hydroperoxides, such as tert-butyl hydroperoxide; and, peroxides, such as benzoyl peroxide and cyclohexanone peroxide. Photoinitiators which are useful include, but are not limited to, those selected from benzoin ethers, such as benzoin methyl ether or benzoin isopropyl ether; substituted benzoin ethers, such as anisole methyl ether; substituted acetophenones, such as 2,2-diethoxyacetophenone and 2,2-dimethoxy-2-phenyl acetophenone; substituted alpha-ketols, such as 2-methyl-2-hydroxy propiophenone; aromatic sulfonyl chlorides, such as 2-naphthalene sulfonyl chloride; and, photoactive oximes, such as 1-phenyl-1,2-propanedione-2-(ethoxycarbonyl)oxime. For both thermal-and radiation-induced polymerizations, the initiator is present in an amount of about 0.05% to about 5.0% by weight based upon the total weight of the monomers.

The adhesive polymer, once formed, is either present in solvent or dissolved in solvent to form a coatable composition. Examples of suitable solvents include alkanes such hexane and heptane, esters such as ethyl acetate, aromatics such as benzene and toluene, ethers such as diethyl ether and tetrahydrofuran, ketones such as acetone and methyl ethyl ketone, and mixtures thererof. The coatable composition can be coated using a variety of coating techniques. For example, the adhesive can be coated by such methods as knife coating, roll coating, gravure coating, rod coating, spray coating, curtain coating, and air knife coating. The adhesive mixture may also be printed by known methods such as screen printing or inkjet printing. The coated solvent-based adhesive is then dried to remove the solvent. Typically, the coated solvent-based adhesive is subjected to elevated temperatures, such as those supplied by an oven, to expedite drying of the adhesive.

Generally, once the adhesive layer has been formed it is covered by a release substrate to protect the adhesive layer and permit easy transportation of the tape. The release substrate may be a release liner or a low adhesion backside (LAB) coating on the side of the dimensionally stable transparent polymeric film substrate opposite to the adhesive layer.

In some embodiments, the release substrate is a release liner. Any suitable release liner can be used. Exemplary release liners include those prepared from paper (e.g., Kraft paper) or polymeric material (e.g., polyolefins such as polyethylene or polypropylene, ethylene vinyl acetate, polyurethanes, polyesters such as polyethylene terephthalate, and the like). At least some release liners are coated with a layer of a release agent such as a silicone-containing material or a fluorocarbon-containing material. Exemplary release liners include, but are not limited to, liners commercially available from CP Film (Martinsville, Va.) under the trade designation "T-50", "T-30", and "T-10" that have a silicone release coating on polyethylene terephthalate film. The liner can have a microstructure on its surface that is imparted to the adhesive to form a microstructure on the surface of the adhesive layer. The liner can then be removed to expose an adhesive layer having a microstructured surface.

In some embodiments, the release substrate is an LAB. In this form, the adhesive surface contacts the back surface of the article. The LAB prevents the adhesive from permanently adhering to the back surface of the article and allows that article to be unwound.

In some embodiments, the adhesive layer is prepared by a coat and cure process. In this technique a coatable mixture is coated on the dimensionally stable transparent polymeric film and then subjected to curing, generally photochemically. If the coatable mixture contains only monomers, the viscosity may not be sufficiently high to be readily coatable. Several techniques may be used to generate a mixture with a coatable viscosity. A viscosity modifying agent may be added such as high or relatively high molecular weight species or thixotropic agents such as colloidal silicas, etc. Alternatively the monomer mixture can be partially prepolymerized to give a coatable syrup as described in, for example, US Patent No. 6,339,111 (Moon, et al.).

An initiator or initiators may be used to prepare a coatable syrup as well as to initiate polymerization of the adhesive polymer after coating. These initiators may be the same or different, and each initiator may be a thermal initiator or a photoinitiator. Typically, for ease of processing, photoinitiators are used. Examples of useful photoinitiators include benzoin ethers such as benzoin methyl ether and benzoin isopropyl ether; substituted phosphine oxides such as 2,4,6-trimethylbenzoyldiphenylphosphine oxide available as LUCIRIN TPO-L (BASF); substituted acetophenones such as 2,2- diethoxyacetophenone, available as IRGACURE 651 photoinitiator (Ciba; Ardsley, N.Y.), 2,2-dimethoxy-2-phenyl-1-phenylethanone, available as ESACURE KB-1 photoinitiator (Sartomer Co.; West Chester, Pa.), and dimethoxyhydroxyacetophenone; substituted α-ketols such as 2- methyl-2-hydroxy propiophenone; such as 2-naphthalene-sulfonyl chloride; such as 1-phenyl-1,2-propanedione-2-(O-ethoxy-carbonyl)oxime. Particularly useful are the substituted acetophenones or 2,4,6-trimethylbenzoyldiphenylphosphine oxide.

Upon curing, or prior to curing, the adhesive layer prepared by the coat and cure technique is generally also covered with a release substrate as described above.

While tapes formed by the coating of solvent-borne adhesive compositions are very similar to tapes formed by the coat and cure technique, the coat and cure tapes have some different features. For example, when the coat and cure technique is used, it has been noted that it generally not necessary to surface modify the dimensionally stable transparent polymeric film. Also, as described above, while the adhesive matrix formed by the coat and cure technique may contain acidic co-monomers, they also may be acid-free. Additionally, because the coat and cure adhesive polymer is formed on the polymeric film backing instead of being coated onto the polymeric film backing, higher levels of crosslinking can be achieved.

Also disclosed are methods for preparing security articles. The above described tapes are designed to be particularly suitable as processing tapes for the preparation of security articles, particularly security articles which have a microstructured surface that must be temporarily covered by a processing tape to allow laser light to write interior layers of the security article.

The general method of using the tapes of this disclosure are applicable regardless of the method used to prepare the tape, either by indirect coating of a solvent-borne pressure sensitive or forming the pressure sensitive layer by a coat and cure technique. As described above, the processing tapes in order to be useful to prepare security articles, require a range of special properties beyond the normal tape properties of tack, peel adhesion and shear strength. Among these properties, as will be described below, are the properties of transparency, refractive index in the range of 1-45-1.55, ability to wet out a microstructured surface, thermal stability to withstand elevated temperature lamination and remain removable, and die cutability.

The methods for preparing security articles comprise preparing a laminate of the tapes of this disclosure and an article with a microstructured surface. This lamination is carried out at room temperature by removing the release substrate from the processing tape (either by removing a release liner or unrolling the tape to remove the LAB surface from the adhesive layer) and contacting the adhesive layer to the microstructured surface of the article.

The article with a microstructured surface is generally a component of, or will become a component of, a multi-layer security document that includes an optically transparent cover layer. This cover layer has a first surface, a second surface, and a thickness between the first surface and the second surface. The cover layer typically is a film layer, but it may also be for example a substrate layer, meaning that it is more rigid than a film layer.

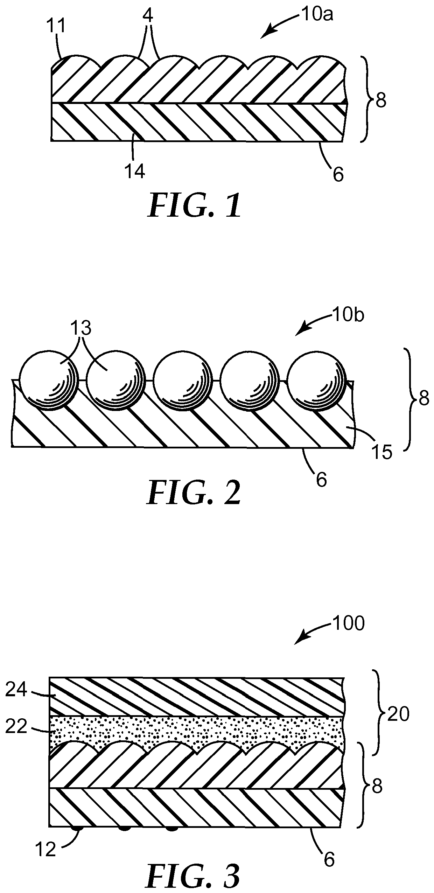

Particularly suitable cover layers are microlens sheeting such as described in US Patent No. 6,288,842 (Florczak et al.) and US Patent Publication No. 2007/0081254 (Endle et al.). The microlens sheeting comprises one or more discrete layers of microlenses with a layer of material adjacent to one side of the microlens layer or layers. For example, Figure 1 illustrates one embodiment of a suitable type of microlens sheeting **10a.** This sheeting comprises a transparent cover layer **8** having first and second surfaces, the second surface **6** being substantially planar and the first surface **11** having an array of substantially spherical or aspherical microlenses **4.** The cover layer **8** may optionally comprise sub-layer **14** (described below), or cover layer **8** may be a single layer. The second surface **6** comprises a composite image as described in more detail below. Figure 2 illustrates another embodiment of a suitable type of microlens sheeting **10b.** The shape of the microlenses and thickness of the base sheet and their variability are selected such that light appropriate for viewing the sheeting is focused approximately at the second surface **6.** In this embodiment, the microlens sheeting of cover layer **8** includes a monolayer of transparent microspheres **13** that are partially embedded in a material layer **15,** which is also typically a bead binder layer, such as a polymeric material. The layer of material **15** includes a second surface **6** comprising a composite image as described in more detail below. The microspheres **13** are transparent to the wavelengths of light in which the composite image will be viewed. This type of sheeting is described in greater detail in U.S. Patent No. 3,801,183, except where the bead bond layer is very thin, for instance, to the extent where the bead bond layer is only between the beads, or occupying the interstitial spaces between the beads. Alternatively, this type of sheeting can be made by using microspheres of an appropriate optical index for focusing radiation approximately on the second surface **6** of the layer of material **15** when the bead bond is of the thickness taught in U.S. Patent No. 3,801,183. Such microspheres include polymethyl methylacrylate beads, which are commercially available from Esprix Technologies based in Sarasota, FL.

The microlenses of the sheeting **10a** and **10b** typically have image forming refractive elements in order for image formation (described in more detail below) to occur; this is generally provided by forming spherically or aspherically shaped features. Other useful materials that provide a gradient refractive index (GRIN) will not necessarily need a curved surface to refract light. The microlenses may have any symmetry, such as cylindrical or spherical, provided real images are formed by the refraction surfaces. The microlenses themselves can be of discrete form, such as round plano-convex lenslets, round double convex lenslets, Fresnel lenslets, diffractive lenslets, rods, microspheres, beads, or cylindrical lenslets. Materials from which the microlenses can be formed include glass, polymers, minerals, crystals, semiconductors and combinations of these and other materials. Non-discrete microlens elements may also be used. Thus, microlenses formed from a replication or embossing process (where the surface of the sheeting is altered in shape to produce a repetitive profile with imaging characteristics) can also be used.

Microlenses with a uniform refractive index of between 1.4 and 3.0 over the visible and infrared wavelengths are typical, more typically, between 1.4 and 2.5, and even more typically between 1.45 and 1.55. The refractive power of the microlenses, whether the individual microlenses are discrete or replicated, and regardless of the material from which the microlenses are made, is typically such that the light incident upon the optical elements will focus on or near the second surface **6** of cover layer **8.** In certain embodiments, the microlenses generally form a demagnified real image at the appropriate position on that layer. The construction of the microlens sheeting provides the necessary focusing conditions so that energy incident upon the front surface of the microlens sheeting is approximately focused on or near the second surface **6** of cover layer **8.**

Microlenses with diameters ranging from 15 micrometers to 275 micrometers are particularly suitable, though other sized microlenses may be used. Good composite image resolution can be obtained by using microlenses having diameters in the smaller end of the aforementioned range for composite images that are to appear to be spaced apart from the microlens layer by a relatively short distance, and by using larger microlenses for composite images that are to appear to be spaced apart from the microlens layer by larger distances. Other microlenses, such as plano-convex, spherical or aspherical microlenses having lenslet dimensions comparable to those indicated for the microlenses, can be expected to produce similar optical results. Cylindrical lenses having lenslet dimensions comparable to those indicated for the microlenses can be expected to produce similar optical results, although different or alternative imaging optics train may be required.

As noted above, a layer of material **14** in Figure 1 may be provided adjacent to the microlenses in the microlens sheeting **10a.** This layer of material is referred to herein as a "spacing layer" or "spacing film". Suitable materials for the spacing layer **14** in the sheeting **10a** include silicone, polyester, polyurethane, polycarbonate, polypropylene, or any other polymer capable of being made into sheeting or being supported by the microlens sheeting in **10a.** In one embodiment, the cover layer **8** may include a microlens layer and a spacing layer **14** that are made from different materials. For example, the microlens layer may include acrylates, and the spacing layer may include polyester. In other embodiments, the sheeting **10a** may include a microlens layer and a spacing layer that are made from the same materials. For example, the microlens and spacing layer of the cover layer **8** may be made of silicone, polyester, polyurethane, polycarbonate, polypropylene, or any other polymer capable of being made into sheeting, and may be formed by methods of mechanical embossing, replication or molding.

As described above, the thickness of the cover layer is selected such that the focal plane of the microlenses is at or near the location of the second surface **6.**

Additionally, because the microlens sheeting not only forms an exterior surface of a security article but also is the surface contacted by the processing tape, it may be desirable to have a surface coating on the microlens surface of the cover layer. This surface coating can be useful to prevent soiling, scratching, etc of the microlens surface and can aid in the removal of the processing tape, by, for example, lowering the surface energy of the microstructured surface. A wide variety of surface coatings are suitable as long as they do not interfere with the optical and mechanical properties of the microstructured surface of the microlens sheeting.

The laminate formed by laminating the processing tape to the article with a microstructured surface is then heat laminated to a multi-layer substrate. The reverse surface (second surface **6**) of the tape/article laminate is laminated to the multi-layer substrate. The multi-layer substrate may include, for example an imaging layer and a variety of other optional layers such as a backing layer, etc. The heat lamination is carried out under conditions of elevated temperature and pressure. For example, in some embodiments a polycarbonate card of six layers can be laminated under a heating cycle of 180°C and 100 Newtons per square centimeter (N/cm²) for 20 minutes followed by a cooling cycle to room temperature with a pressure of 150 N/cm² for 20 minutes.

During the application of the heat and pressure, it is desirable that the pressure sensitive adhesive of the processing tape wet out the microstructured surface without oozing. Oozing of the pressure sensitive adhesive can lead to a variety of problems and complications to the process of forming security articles. Pressure sensitive adhesive that oozes can be very difficult to remove. Because the oozed material is a pressure sensitive adhesive, it is designed to adhere strongly to a variety of substrates. Additionally, once the oozed pressure sensitive adhesive has cooled it will revert to its original elastomeric polymer form. In extreme cases, if a large quantity of pressure sensitive adhesive oozes from the tape, the microstructured surface can come in contact with the dimensionally stable tape backing of the tape and this can damage or mar the microstructured surface. If oozing is very severe, it can result in adhesive oozing onto the metal plates of the lamination equipment as well. This can result, not only in the destruction of the security article, but also the damaging of the lamination equipment resulting in the need for repair or for extensive cleaning.

Upon completion of the heat lamination, it is desirable that the adhesive layer of the processing tape has wet out the microstructured surface sufficiently that the microstructured surface is invisible to a writing laser. Also, for this reason it is desirable that the refractive index of the pressure sensitive adhesive match the refractive index of the microstructured surface. Typically, if the refractive indices are within 0.05 of each other, the microstructured surface will be invisible to a writing laser.

After the heat lamination process, the formed security sheet is die cut to form security articles. In die cutting, guillotine or shaped blades slice the security sheet into articles of the desired size and shape. For ease of die cutting, it is desirable that the adhesive not flow or ooze during or after the die cut. If the adhesive flows or oozes during the cutting process it can foul the die blade making the cutting process difficult or impossible. If the adhesive flows or oozes after the cutting process, the exposed adhesive surface can cause the security article to stick to other security articles or the surface can pick up dirt or debris that can soil the security article. Also, after die cutting it may be desirable for the security article to be stored for later use or shipped to another location for further processing. Exposed adhesive surfaces make packing and shipping difficult.

After die cutting, a variety of processing steps may be carried out to add personalization information to the security document. These steps may include laser engraving indicia, pictures, logos, etc onto interior layers of the security document. Examples of such imaging processes are described in the copending patent application Attorney Number 67585US002 titled "Laser-Personalizable Security Articles" filed the same day as the present application. The microstructured surface of the security article would prevent or distort laser light from penetrating to the interior layers and therefore the wet out adhesive layer of the processing tape permits the laser light to image the interior layers.

The personalization steps frequently take place at a different location from the location where the security document is prepared. For example, if the security article is a driver's license, the personalization steps may involve the laser writing of a picture, signature or other information at the driver's license bureau office.

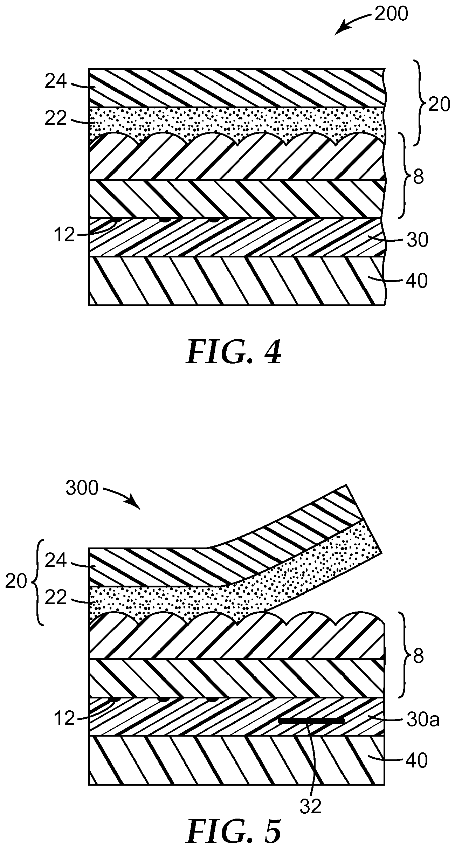

A method of preparing a security article using the processing tape of this disclosure is further illustrated in Figures 3 and 4. In Figure 3, article **100** is shown which comprises microlens sheeting **8** and processing tape **20** laminated to the microstructured surface of microlens sheeting **8.** Microlens sheeting **8** can be the microlens sheeting of either Figure 1 or Figure 2, and may contain optional layer **14.** A composite image **12** is present on a portion of second surface **6** of microlens sheeting **8.** Composite image **12** is merely descriptive, is not to scale, and is not designated to show alignment with the microlenses through which the image is viewed. The processing tape **20** comprises pressure sensitive adhesive layer **22** and dimensionally stable backing **24.**

Figure 4, shows article **200,** which is prepared by laminating article **100** of Figure 3 to a substrate comprising at least imagable layer **30** and option layer or layers **40.** The remaining elements of Figure 4: microlens sheeting **8;** processing tape **20** comprising pressure sensitive adhesive layer **22** and dimensionally stable backing **24;** and composite image **12** are all as described above.

Once the personalization step or steps are complete, the processing tape is removed to generate the completed security article. The removal of the processing tape may be done by hand or through the use of mechanical devices such as, for example, a collection tool. Examples of collection tools include clips or other similar devices that are attached to the processing tape and mechanically peel away the processing tape. The collection tool may include a winding tool to wind up the removed processing tape. After the processing steps described above, and even after the passage of time that might be days, weeks, months or even years, it is desirable that the adhesive layer release cleanly from the microstructured surface without leaving any residue. A small amount of residue may be easily removable, but larger amounts of residue left on the security article may require an added cleaning step or may result in the security document being rejected from use. Therefore, clean removal of the processing tape is desirable.

An embodiment of a laser personalized security article of this disclosure is illustrated in Figure 5. In this figure, the laser-personalized article **300** is the laser-personalizable article of Figure 4 that has been laser-personalized and the processing tape **20** is being removed. Article **300** comprises microlens sheeting **8** with composite image **12** laminated to imaged layer **30a** (imaged layer **30a** results from the imaging of imagable layer **30**) with personalized image **32,** and also contains optional layer or layers **40.** Processing tape **20,** comprising pressure sensitive adhesive layer **22** and dimensionally stable backing **24** is being removed from the microstructured surface of microlens sheeting **8.**

The present disclosure includes the following embodiments.

Among the embodiments are tapes. A first embodiment includes a tape comprising: a dimensionally stable transparent polymeric film, with at least one treated surface; a transparent pressure sensitive adhesive layer at least partially coated on the treated surface of the dimensionally stable transparent polymeric film; and a release surface covering the transparent pressure sensitive adhesive layer, wherein the pressure sensitive adhesive layer comprises a crosslinked (meth)acrylate-based polymer comprising 95-99.5% alkyl (meth)acrylate monomers and 0.5-5% acidic monomers, and wherein the transparent pressure sensitive adhesive layer has a refractive index in the range of 1.45-1.55.

Embodiment 2 is the tape of embodiment 1, wherein the dimensionally stable transparent polymeric film comprises a polycarbonate film.

Embodiment 3 is the tape of embodiment 2, wherein the treated surface of the polycarbonate film comprises a primed surface, a corona treated surface or a combination thereof.

Embodiment 4 is the tape of embodiment 3, wherein the primer comprises an aqueous primer.

Embodiment 5 is the tape of embodiment 4, wherein the aqueous primer comprises a mixture of silica and organosilanes.

Embodiment 6 is the tape of any of embodiments 1-5, wherein the alkyl(meth)acrylate monomers comprise iso-octyl acrylate, 2-ethyl hexyl acrylate, or a combination thereof.

Embodiment 7 is the tape of any of embodiments 1-6, wherein the transparent pressure sensitive adhesive layer comprises 0.3-0.75% by weight crosslinker.

Embodiment 8 is a tape comprising: a dimensionally stable transparent polymeric film; a transparent pressure sensitive adhesive layer at least partially coated on the dimensionally stable transparent polymeric film; and a release surface covering the transparent pressure sensitive adhesive layer, wherein the transparent pressure sensitive adhesive layer comprises a crosslinked (meth)acrylate-based polymer comprising 95-100% alkyl (meth)acrylate monomers and 0-5% acidic monomers, and wherein the transparent pressure sensitive adhesive layer has a refractive index in the range of 1.45-1.55.

Embodiment 9 is the tape of embodiment 8, wherein the dimensionally stable transparent polymeric film comprises a polycarbonate film.

Embodiment 10 is the tape of embodiment 8 or 9, wherein the alkyl(meth)acrylate monomers comprise iso-octyl acrylate, 2-ethyl hexyl acrylate, iso-bornyl acrylate or a combination thereof.

Embodiment 11 is the tape of any of embodiments 8-10, wherein the transparent pressure sensitive adhesive layer comprises 0.3-1.0% by weight crosslinker.

Among the embodiments are methods of preparing security articles. Embodiment 12 is a method of preparing a security article comprising: preparing a laminate, wherein preparing a laminate comprises: providing an article with a microstructured surface; providing a tape, the tape comprising: a dimensionally stable transparent polymeric film with at least one treated surface; a transparent pressure sensitive adhesive layer at least partially coated on the treated surface of the dimensionally stable transparent polymeric film; and a release surface covering the transparent pressure sensitive adhesive layer, wherein the transparent pressure sensitive adhesive layer comprises a crosslinked (meth)acrylate-based polymer comprising 95-99.5% alkyl (meth)acrylate monomers and 0.5-5% acidic monomers, and wherein the transparent pressure sensitive adhesive layer has a refractive index in the range of 1.45-1.55; removing the release surface from the transparent pressure sensitive adhesive layer and laminating the tape to the microstructured surface at room temperature; laminating the laminate to a multi-layer substrate at an elevated temperature and pressure to form a security article, such that the transparent pressure sensitive adhesive layer sufficiently wets out the microstructured surface to render the microstructured surface invisible to a writing laser; die cutting the formed security article; personalizing the formed security article; and removing the tape.

Embodiment 13 is the method of embodiment 12, wherein providing a tape comprises: providing a dimensionally stable transparent polymeric film; treating at least one surface of the dimensionally stable transparent polymeric film; providing a pressure sensitive adhesive layer, wherein providing a pressure sensitive adhesive layer comprises: providing a pressure sensitive adhesive solvent-borne composition; coating the pressure sensitive adhesive solvent-borne composition on a release surface; and removing the solvent from the pressure sensitive adhesive coating; and contacting the adhesive layer to the treated surface of the dimensionally stable transparent polymeric film.

Embodiment 14 is the method of embodiment 12 or 13, wherein the dimensionally stable transparent polymeric film comprises polycarbonate.

Embodiment 15 is the method of any of embodiments 12-14, wherein treating at least one surface of the dimensionally stable transparent polymeric film comprises corona treatment, application of a primer, or a combination thereof.

Embodiment 16 is the method of embodiment 15, wherein the primer comprises an aqueous primer.

Embodiment 17 is the method of embodiment 16, wherein the aqueous primer comprises a mixture of silica and organosilanes.

Embodiment 18 is the method of any of embodiments 12-17, wherein the alkyl(meth)acrylate monomers comprise iso-octyl acrylate, 2-ethyl hexyl acrylate, or a combination thereof.

Embodiment 19 is the method of any of embodiments 12-18, wherein the transparent pressure sensitive adhesive layer comprises 0.3-0.75% by weight crosslinker.

Embodiment 20 is the method of any of embodiments 12-19, wherein the refractive index of the pressure sensitive adhesive layer matches to within 0.05 the refractive index of the microstructured surface.

Embodiment 21 is a method of preparing a security article comprising: preparing a tape laminate, wherein preparing a tape laminate comprises: providing an article with a microstructured surface; providing a tape, the tape comprising: a dimensionally stable transparent polymeric film; a transparent pressure sensitive adhesive layer at least partially coated on the dimensionally stable transparent polymeric film; and a release surface covering the transparent pressure sensitive adhesive layer, wherein the transparent pressure sensitive adhesive layer comprises a crosslinked (meth)acrylate-based polymer comprising 95-100% alkyl (meth)acrylate monomers and 0-5% acidic monomers, and wherein the transparent pressure sensitive adhesive layer has a refractive index in the range of 1.45-1.55; removing the release surface from the transparent pressure sensitive adhesive layer and laminating the tape to the microstructured surface at room temperature; laminating the tape laminate to a multi-layer substrate at an elevated temperature and pressure to form a security article, such that the transparent pressure sensitive adhesive layer sufficiently wets out the microstructured surface to render the microstructured surface invisible to the naked human eye; die cutting the formed security article; personalizing the formed security article; and removing the tape.

Embodiment 22 is the method of embodiment 21, wherein providing a tape comprises: providing a dimensionally stable transparent polymeric film; coating an adhesive precursor mixture on the dimensionally stable transparent polymeric film; applying a release surface to the adhesive layer; and curing the adhesive precursor mixture to form a transparent pressure sensitive adhesive layer.

Embodiment 23 is the method of embodiment 21 or 22, wherein the dimensionally stable transparent polymeric film comprises polycarbonate.

Embodiment 24 is the method of any of embodiments 21-23, wherein the alkyl(meth)acrylate monomers comprise iso-octyl acrylate, 2-ethyl hexyl acrylate, iso-bornyl acrylate, or a combination thereof.

Embodiment 25 is the method of any of embodiments 21-24, wherein the transparent pressure sensitive adhesive layer comprises 0.3-1.0% by weight crosslinker.

Embodiment 26 is the method of any of embodiments 21-25, wherein the refractive index of the pressure sensitive adhesive layer matches to within 0.05 the refractive index of the microstructured surface.

### Examples

These examples are merely for illustrative purposes only and are not meant to be limiting on the scope of the appended claims. All parts, percentages, ratios, etc. in the examples and the rest of the specification are by weight, unless noted otherwise. Solvents and other reagents used were obtained from Sigma-Aldrich Chemical Company; Milwaukee, Wisconsin unless otherwise noted.

**Table of Abbreviations**

| Abbreviation or Nickname | Description |
|---|---|
| PSA-1 | A pressure sensitive adhesive polymer composition with a monomer ratio of 98/2 IOA/AA dissolved in MEK at 26 % solids, prepared as described in US Patent No. 7,385,020, Example 1. |
| PSA-2 | A pressure sensitive adhesive polymer composition with a monomer ratio of 96/4 EHA/AA dissolved in MEK at 25 % solids, prepared as described in US Patent No. 7,385,020, Example 1. |
| PSA-3 | A silicone gel commercially available from Dow Corning, Midland, MI as "7-9850". |
| Acrylate Resin | A curable acrylate resin containing: 30 weight% "SR601" commercially |
| | available from Sartomer, Exton, PA; 30 weight% HDDA; 40 weight% "SR399" commercially available from Sartomer, Exton, PA; 1 weight% "TPO" commercially available from BASF, Florham Park, NJ; and 0.5 weight% initiator "TINUVIN 405" commercially available from CIBA, Hawthorne, NY. |
| MEK | Methyl ethyl ketone |
| IOA | Iso-octyl acrylate |
| AA | Acrylic acid |
| Crosslinker | Aziridine crosslinker, 1,1'-isophthaloylbis(2-methylaziridine), CAS 7652-64-4. |
| PC Backing | A 3 mil (75 micrometer) thick 3M Clear Polycarbonate Security Film commercially available from 3M Company, St. Paul, MN. |
| PET Backing | Untreated 2 mil (51 micrometer) thick polyethylene terephthalate film commercially available from Mitsubishi Polyester Film Group, Greer, SC. |
| Primer | A water-based primer prepared as described in Synthesis Example SE1 below. |
| Silica Nanoparticles | A dispersion of silica nanoparticles in water (14.5 % solids) commercially available as NALCO 2326 commercially available from Nalco Company, Naperville, IL. |
| APS | 3-aminopropyltriethoxysilane, commercially available from OSi Specialties, Danbury, CT as "SILQUEST A-1100". |
| Surfactant | Nonionic surfactant X-100. |
| Release Liner | Release liner commercially available from CP Film, Martinsville, VA as "T50". |
| EHA | 2-ethylhexyl acrylate |
| IBOA | Isobornyl acrylate |
| HDDA | Hexanediol di-acrylate |
| Photoinitiator | Photoinitiator IRGACURE 651 commercially available from CIBA, Hawthorne, NY. |

### Test Methods

### Laminate Preparation and Processing Tape Test:

Tape samples were tested for their ability to function as processing tapes for two dimensional imaging of security cards with microstructured surfaces through the following test procedure.

A microlens film sheet was produced by micro-replication of an array of tightly packed lenses with Acrylate Resin onto a roll of 100 micrometers (4 mils) thick 3M Clear Polycarbonate Security Film (3M Company, St. Paul, MN). The resulting lens film was approximately 123 micrometers thick. The replicated lenses had a 37.0 micrometer radius of curvature and a negative 0.931 conic constant. The diameter of each lens formed at the surface of the acrylate was 86 micrometers, with a center-to-center lens distance of 74 micrometers. The microlens film sheet was then imaged with color floating/sinking images to form the imaged lens film "A", following the process as that described in US Patent Publication 2007/0081254.

The sample tape was laminated to the microstructured surface of the microlens film sheet to form cover film "B".

The cover film "B" was sheeted to 15.2 centimeter x 15.2 centimeter (6 inch x 6 inch) square sheets and stacked with the color floating/sinking image side down to other sheets of the same size to form the seven layer stack shown in Table A below.

**Table A**

| Layer | Description |
|---|---|
| 1 | Cover Layer "B" |
| 2 | 100 micrometer thick 3M Laser Engravable Polycarbonate Security Film (3M Company, St. Paul, MN) |
| 3 | 100 micrometer thick 3M White Polycarbonate Security Film (3M Company, St. Paul, MN) |
| 4 | 100 micrometer thick 3M White Polycarbonate Security Film (3M Company, St. Paul, MN) |
| 5 | 100 micrometer thick 3M White Polycarbonate Security Film (3M Company, St. Paul, MN) |
| 6 | 100 micrometer thick 3M Laser Engravable Polycarbonate Security Film (3M Company, St. Paul, MN) |
| 7 | 50 micrometer thick 3M Clear Polycarbonate Security Film (3M Company, St. Paul, MN) |

The stack of films described by Table A was laminated with heat and pressure using a Carver press under typical polycarbonate card lamination conditions. These conditions are: heating the stack under 166°C (330°F), and 758 kiloPascals (110 psi) for 15 minutes, followed by cooling to room temperature under 758 kiloPascals (110 psi). Sample polycarbonate cards in the dimension of 8.56 centimeters x 5.40 centimeters (3.370 inches x 2.125 inches) were punched out from the laminated stack.

The sample polycarbonate cards were laser engraved with a portrait at 300 dots per inch (118 dots per centimeter) resolution by a MECCOMARK Fiber Laser Marking System equipped with a 20W fiber laser. The sample tape was then removed by hand peel.

The following criteria were noted and recorded for this process. The first criterion was "Card Quality". For this criterion, it was noted whether the tape was able to withstand the lamination process without warping or other defect. If the Card Quality was acceptable the sample was listed as "Pass". The second criterion was "Tape Removal By Peel". For this criterion, the difficulty of peeling the tape away from the microstructured surface was characterized by the "tightness" of the adhesive bond. A difficulty of peel such that the tape cannot be removed would be listed as "Fail", otherwise a general description of the tightness is listed. Additionally, the amount of adhesive residue left behind on the microstructured surface was described as the level of "cleanness" of the removal. "Clean removal" indicated that no residue was left, otherwise a percentage of adhesive removed (for example "98% removal" indicates that 98% of the microstructured surface is free of residue). The final criterion was "2 Dimensional Laser Image Formation". In this criterion, the quality of the 2 dimensional laser image engraved through the processing tape was described. "Good" indicated a good image was formed, "Poor", "Blurry" or "Too Dark" indicated a poor, blurry or too dark of an image was formed.

### Synthesis Example SE1: Preparation of Primer

A water-borne primer was prepared by mixing together de-ionized water (436.75 grams), Silica Nanoparticles (61.39 grams), APS (0.801 gram), Surfactant (1.20 grams), and 29% ammonium hydroxide (0.9648 gram).

### Example 1:

A series of tape samples were made by preparing a surface treated PC Backing and laminating an adhesive layer coated on a release liner to it.

### Preparation of Surface Treated PC Backing:

A sample of PC Backing was surface treated by air corona treatment (0.75 Joules/cm² in air) and application of Primer prepared in Synthesis Example SE1. The Primer was applied using a #3 Meyer Rod to give a nominal wet thickness of 100 nanometers. The PC Backing was then dried in a 110°C oven for 30 minutes.

### Preparation of Pressure Sensitive Adhesive Layer:

A solvent-borne pressure sensitive adhesive composition was prepared by mixing together PSA-1 or PSA-2 and Crosslinker as described in Table 1. The solvent-borne pressure sensitive adhesive composition was coated on Release Liner using a knife coater to give a wet thickness of 6 mils (152 micrometers), and then dried in a 120°C oven for 15 minutes to give a dry thickness of approximately 0.9-1.1 mils (23-28 micrometers) to form an adhesive layer.

### Preparation of Tape:

The tape sample was prepared by laminating the adhesive layer to the surface treated PC Backing.

**Table 1**

| Example | PSA | Crosslinker Amount (dry wt %) |
|---|---|---|
| 1A | PSA-1 | 0.75 |
| 1B | PSA-1 | 0.50 |
| 1C | PSA-2 | 0.50 |

### Preparation of Laminates and Processing Tape Testing:

Tape Samples 1A-1C were used to prepare laminates and Processing Tape Testing was carried out using the Test Method described above. The results are shown in Table 2.

**Table 2**

| Example | Card Quality | Tape Removal By Peel | 2 Dimensional Laser Image Formation |
|---|---|---|---|
| 1A | Pass | Somewhat tight Peel, 98% clean removal | Good |
| 1B | Pass | Somewhat tight Peel, 95% clean removal | Good |
| 1C | Pass | Somewhat tight Peel, 95% clean removal | Good |

### Example 2:

A series of tape samples were prepared by coating a curable pressure sensitive adhesive mixture on a PC Backing and photocuring the curable mixture to form the adhesive layer.

### Preparing, Coating, and Curing the Curable Mixture:

For Examples 2A-2D, the curable mixture was a mixture of IOA/AA in the ratio shown in Table 3. For Examples 2E-2F, the curable mixture was an 80/20 mixture of EHA/IBOA. The level of crosslinking monomer (HDDA) and Photoinitiator are also shown in Table 3. The mixture was coated between the PC Backing and the Release Liner in a knife coater with 1.0 mil (25 micrometer) gap to form a curable coating. The coating was cured by low intensity UV for 30 minutes (∼2.4 Joules/cm² dosage with an F15T8/BLB, Sylvania, Danvers, MA).

**Table 3**

| Example | Monomer Identity and Ratio | Crosslinking Agent (HDDA) Level (wt %) | Photo initiator Level (wt%) |
|---|---|---|---|
| 2A | IOA/AA 98/2 | 0.4 | 0.2 |
| 2B | IOA/AA 99/1 | 0.4 | 0.2 |
| 2C | IOA/AA 99/1 | 0.3 | 0.2 |
| 2D | IOA/AA 100/0 | 0.3 | 0.2 |
| 2E | EHA/IBOA 80/20 | 0.5 | 0.4 |
| 2F | EHA/IBOA 80/20 | 0.4 | 0.4 |

### Preparation of Laminates and Processing Tape Testing:

Tape Samples 2A-2F were used to prepare laminates and Processing Tape Testing was carried out using the Test Method described above. The results are shown in Table 4.

**Table 4**

| Example | Card Quality | Tape Removal By Peel | 2 Dimensional Laser Image Formation |
|---|---|---|---|
| 2A | Pass | Somewhat tight Peel, almost clean removal | Good |
| 2B | Pass | Somewhat soft Peel, clean removal | Good |
| 2C | Pass | Somewhat tight Peel, 90-95% clean removal | Good |
| 2D | Pass | Somewhat tight Peel, 75-95% clean removal | Good |
| 2E | Pass | Somewhat tight Peel, clean removal | Good |
| 2F | Pass | Somewhat tight Peel, 98% clean removal | Good |

### Comparative Example C1:

In Comparative Example C1, a tape was prepared by coating PSA-3 on a roll of 50 micrometers (2 mils) thick 3M Clear Polycarbonate Security Film (3M Company, St. Paul, MN) using a knife coater, followed by drying in a 120°C oven for 15 minutes to give a dry thickness of approximately 0.9-1.1 mils (23-28 micrometers). The tape sample was used to prepare a laminate and Processing Tape Testing was carried out using the Test Method described above. The results are shown in Table 5.

**Table 5**

| Example | Card Quality | Tape Removal By Peel | 2 Dimensional Laser Image Formation |
|---|---|---|---|
| C1 | Pass | Somewhat tight Peel, almost clean removal | Poor, Air Bubbles present on a very light image |

### Comparative Example C2:

In Comparative Example C2, a tape was prepared as described in Example 1 above, using PET Backing. The tape sample was used to prepare a laminate as described in the Laminate Preparation and Processing Tape Test procedure described above. However, upon cooling the laminate it was discovered that the construction had warped and was deemed unacceptable.

## Claims

1. A tape comprising:
a dimensionally stable transparent polymeric film, with at least one treated surface;
a transparent pressure sensitive adhesive layer at least partially coated on the treated surface of the dimensionally stable transparent polymeric film; and
a release surface covering the transparent pressure sensitive adhesive layer,
wherein the pressure sensitive adhesive layer comprises a crosslinked (meth)acrylate-based polymer comprising 95-99.5% alkyl (meth)acrylate monomers and 0.5-5% acidic monomers, and wherein the transparent pressure sensitive adhesive layer has a refractive index in the range of 1.45-1.55.

2. The tape of claim 1, wherein the dimensionally stable transparent polymeric film comprises a polycarbonate film.

3. The tape of claim 2, wherein the treated surface of the polycarbonate film comprises a primed surface, a corona treated surface or a combination thereof.

4. The tape of claim 3, wherein the primer comprises an aqueous primer.

5. The tape of claim 1, wherein the transparent pressure sensitive adhesive layer comprises 0.3-0.75% by weight crosslinker.

6. A tape comprising:
a dimensionally stable transparent polymeric film;
a transparent pressure sensitive adhesive layer at least partially coated on the dimensionally stable transparent polymeric film; and
a release surface covering the transparent pressure sensitive adhesive layer,
wherein the transparent pressure sensitive adhesive layer comprises a crosslinked (meth)acrylate-based polymer comprising 95-100% alkyl (meth)acrylate monomers and 0-5% acidic monomers, and wherein the transparent pressure sensitive adhesive layer has a refractive index in the range of 1.45-1.55.

7. A method of preparing a security article comprising:
preparing a laminate, wherein preparing a laminate comprises:
providing an article with a microstructured surface and a reverse surface;
providing a tape, the tape comprising:
a dimensionally stable transparent polymeric film with at least one treated surface;
a transparent pressure sensitive adhesive layer at least partially coated on the treated surface of the dimensionally stable transparent polymeric film; and
a release surface covering the transparent pressure sensitive adhesive layer, wherein the transparent pressure sensitive adhesive layer comprises a crosslinked (meth)acrylate-based polymer comprising 95-99.5% alkyl (meth)acrylate monomers and 0.5-5% acidic monomers, and wherein the transparent pressure sensitive adhesive layer has a refractive index in the range of 1.45-1.55;
removing the release surface from the transparent pressure sensitive adhesive layer and laminating the tape to the microstructured surface at room temperature;
laminating the reverse surface of the article laminate to a multi-layer substrate at an elevated temperature and pressure to form a security article, such that the transparent pressure sensitive adhesive layer sufficiently wets out the microstructured surface to render the microstructured surface invisible to a writing laser;
die cutting the formed security article;
personalizing the formed security article; and
removing the tape.

8. The method of claim 7, wherein providing a tape comprises:
providing a dimensionally stable transparent polymeric film;
treating at least one surface of the dimensionally stable transparent polymeric film;
providing a pressure sensitive adhesive layer, wherein providing a pressure sensitive adhesive layer comprises:
providing a pressure sensitive adhesive solvent-borne composition;
coating the pressure sensitive adhesive solvent-borne composition on a release surface; and
removing the solvent from the pressure sensitive adhesive coating; and contacting the adhesive layer to the treated surface of the dimensionally stable transparent polymeric film.

9. A method of preparing a security article comprising:
preparing a tape laminate, wherein preparing a tape laminate comprises:
providing an article with a microstructured surface and a reverse surface;
providing a tape, the tape comprising:
a dimensionally stable transparent polymeric film;
a transparent pressure sensitive adhesive layer at least partially coated on the dimensionally stable transparent polymeric film; and
a release surface covering the transparent pressure sensitive adhesive layer, wherein the transparent pressure sensitive adhesive layer comprises a crosslinked (meth)acrylate-based polymer comprising 95-100% alkyl (meth)acrylate monomers and 0-5% acidic monomers, and wherein the transparent pressure sensitive adhesive layer has a refractive index in the range of 1.45-1.55;
removing the release surface from the transparent pressure sensitive adhesive layer and laminating the tape to the microstructured surface at room temperature;
laminating the reverse surface of the article laminate to a multi-layer substrate at an elevated temperature and pressure to form a security article, such that the transparent pressure sensitive adhesive layer sufficiently wets out the microstructured surface to render the microstructured surface invisible to a writing laser;
die cutting the formed security article;
personalizing the formed security article; and
removing the tape.

10. The method of claim 9, wherein providing a tape comprises:
providing a dimensionally stable transparent polymeric film;
coating an adhesive precursor mixture on the dimensionally stable
transparent polymeric film;
applying a release surface to the adhesive layer; and
curing the adhesive precursor mixture to form a transparent pressure sensitive adhesive layer .

11. The method of claim 9, wherein the refractive index of the pressure sensitive adhesive layer matches to within 0.05 the refractive index of the microstructured surface.

## Patentansprüche

1. Ein Klebeband, bestehend aus:
einem formstabilen, durchsichtigen Polymerfilm mit mindestens einer behandelten Fläche,
einer durchsichtigen Haftklebstoff-Schicht, zumindest teilweise beschichtet, auf der behandelten Oberfläche des formstabilen, durchsichtigen Polymerfilms und
eine Entlastungsfläche, die die durchsichtige Haftklebstoff-Schicht abdeckt,
wobei die Haftklebstoff-Schicht ein vernetztes (Meth)Acrylat-basiertes Polymer mit 95-99,5 % Alkyl (Meth)Acrylat-Monomeren und 0,5-5 % Säuremonomer umfasst und die durchsichtige Haftklebstoff-Schicht einen Brechungskoeffizienten von 1,45-1,55 hat.

2. Das Klebeband aus Anspruch 1 mit dem formstabilen, durchsichtigen Polymerfilm enthält eine Polycarbonatfolie.

3. Das Klebeband aus Anspruch 2 mit der behandelten Oberfläche der Polycarbonatfolie enthält eine geprimerte Oberfläche, eine koronabehandelte Oberfläche oder eine Kombination aus beidem.

4. Das Klebeband aus Anspruch 3 mit Primer enthält einen wässrigen Primer.

5. Das Klebeband aus Anspruch 1 mit transparenter Haftklebstoff-Schicht enthält 0,3-0,75 % Vernetzer nach Gewicht.

6. Ein Klebeband, bestehend aus:
einem formstabilen, durchsichtigen Polymerfilm,
einer durchsichtigen Haftklebstoff-Schicht, zumindest teilweise beschichtet, auf dem formstabilen, durchsichtigen Polymerfilm und eine Entlastungsfläche, die die durchsichtige Haftklebstoff-Schicht abdeckt, wobei die durchsichtige Haftklebstoff-Schicht ein vernetztes (Meth)Acrylat-basiertes Polymer mit 95-100 % Alkyl (Meth)Acrylat-Monomeren und 0-5 % Säuremonomer umfasst und wobei die durchsichtige Haftklebstoff-Schicht einen Brechungskoeffizienten von 1,45-1,55 hat.

7. Eine Methode zur Vorbereitung eines Sicherheitsartikels, umfassend:
Vorbereitung eines Laminats, wobei die Vorbereitung des Laminats umfasst:
einen Artikel mit Mikrostruktur-Oberfläche und Rückseite,
ein Klebeband mit:
einem formstabilen, durchsichtigen Polymerfilm mit mindestens einer behandelten Fläche,
einer durchsichtigen Haftklebstoff-Schicht, zumindest teilweise beschichtet, auf der behandelten Oberfläche des formstabilen, durchsichtigen Polymerfilms und
einer Entlastungsfläche, die die durchsichtige Haftklebstoff-Schicht abdeckt, wobei die durchsichtige Haftklebstoff-Schicht ein vernetztes (Meth)Acrylat-basiertes Polymer mit 95-99,5 % Alkyl (Meth)Acrylat-Monomeren und 0,5-5 % Säuremonomer umfasst und wobei die durchsichtige Haftklebstoff-Schicht einen Brechungskoeffizienten von 1,45-1,55 hat.
Entfernung der Entlastungsfläche von der durchsichtigen Haftklebstoff-Schicht und Laminieren des Klebstoffs auf die Mikrostruktur-Oberfläche bei Raumtemperatur.
Laminieren der Rückseite des Laminats auf ein Multilayer-Substrat bei hoher Temperatur und Druck zwecks Formung eines Sicherheitsartikels, so dass die durchsichtige Haftklebstoff-Schicht die Mikrostruktur-Oberfläche genügend durchtränkt, um diese für einen Schreiblaser unsichtbar zu machen; Stanzen des geformten Sicherheitsartikels;
Personalisierung des geformten Sicherheitsartikels und Entfernung des Klebebands.

8. Methode aus Anspruch 7, wobei die Bereitstellung der Folie umfasst:
die Bereitstellung eines formstabilen, durchsichtigen Polymerfilm,
die Behandlung mindestens einer Oberfläche des formstabilen, durchsichtigen Polymerfilms,
die Bereitstellung einer Haftklebstoff-Schicht, wobei die Bereitstellung einer Haftklebstoff-Schicht umfasst:
Bereitstellung eines Lösungsmittel-Verbunds, Beschichtung mit dem Lösungsmittel-Verbund auf einer Entlastungsfläche, und
Entfernung des Lösungsmittels von der Haftklebstoff-Beschichtung, und
Verbindung der Haftklebstoff-Schicht mit der behandelten Oberfläche des formstabilen, durchsichtigen Polymerfilms.

9. Eine Methode zur Vorbereitung eines Sicherheitsartikels, umfassend:
Vorbereitung eines Klebeband-Laminats, dabei: Nutzung eines Artikels mit Mikrostruktur-Oberfläche und Rückseite. Nutzung eines Klebeband mit:
einer formstabilen, durchsichtigen Polymerfolie, zumindest teilweise beschichtet, auf dem formstabilen, durchsichtigen Polymerfilm und eine Entlastungsfläche, die die durchsichtige Haftklebstoff-Schicht abdeckt, wobei die durchsichtige Haftklebstoff-Schicht ein vernetztes (Meth)Acrylat-basiertes Polymer mit 95-100 % Alkyl (Meth)AcrylatMonomeren und 0-5 % Säuremonomer umfasst und die durchsichtige Haftklebstoff-Schicht einen Brechungskoeffizienten von 1,45-1,55 hat.
Entfernung der Entlastungsfläche von der durchsichtigen Haftklebstoff-Schicht und Laminieren des Klebstoffs auf die Mikrostruktur-Oberfläche bei Raumtemperatur.
Laminieren der Rückseite des Laminats auf ein Multilayer-Substrat bei hoher Temperatur und Druck zwecks Formung eines Sicherheitsartikels, so dass die durchsichtige Haftklebstoff-Schicht die Mikrostruktur-Oberfläche genügend durchtränkt, um diese für einen Schreiblaser unsichtbar zu machen; Stanzen des geformten Sicherheitsartikels;
Personalisierung des geformten Sicherheitsartikels und Entfernung des Klebebands.

10. Methode aus Anspruch 9, wobei die Bereitstellung der Folie umfasst:
die Bereitstellung eines formstabilen, durchsichtigen Polymerfilm,
die Behandlung mindestens einer Oberfläche des formstabilen, durchsichtigen Polymerfilms,
die Auftragung einer Entlastungsfläche auf die Haftklebstoff-Schicht und
das Härten der Klebe-Vorläufermixtur zur Herstellung der durchsichtigen Haftklebstoff-Schicht.

11. Methode aus Anspruch 9, wobei der Brechungskoeffizient der Haftklebstoff-Schicht beim 0,05-fachen im Vergleich zur Mikrostruktur-Oberfläche liegt.

## Revendications

1. Ruban comprenant :
un film polymère transparent dimensionnellement stable ayant au moins une surface traitée ;
une couche adhésive transparente sensible à la pression, appliquée au moins partiellement sur la surface traitée du film polymère transparent dimensionnellement stable ; et
une surface de décollement recouvrant la couche transparente d'adhésif sensible à la pression,
cette dernière se composant d'un polymère réticulé à base de (méth)acrylate comprenant 95 à 99,5 % de monomères de (méth)acrylate d'alkyle et 0,5 à
5 % de monomères acides, et dans laquelle la couche adhésive transparente sensible à la pression a un indice de réfraction compris entre 1,45 et 1,55.

2. Le ruban décrit dans la revendication 1, dans lequel le film polymère transparent dimensionnellement stable comprend un film de polycarbonate.

3. Le ruban décrit dans la revendication 2, dans lequel la surface traitée du film de polycarbonate comprend une surface apprêtée, une surface traitée par effet corona ou une combinaison de celles-ci.

4. Le ruban décrit dans la revendication 3, dans lequel l'apprêt comprend un apprêt aqueux.

5. Le ruban décrit dans la revendication 1, dans lequel la couche adhésive transparente sensible à la pression comprend 0,3 à 0,75 % en poids de réticulant.

6. Ruban comprenant :
un film polymère transparent dimensionnellement stable ;
une couche adhésive transparente sensible à la pression, appliquée au moins partiellement sur le film polymère transparent dimensionnellement stable ; et une surface de décollement recouvrant la couche transparente d'adhésif sensible à la pression, cette dernière se composant d'un polymère réticulé à base de (méth)acrylate comprenant 95 à 100 % de monomères de (méth)acrylate d'alkyle et 0 à 5 % de monomères acides, et dans laquelle la couche adhésive transparente sensible à la pression a un indice de réfraction compris entre 1,45 et 1,55.

7. Méthode de préparation d'un article de sécurité comprenant :
la préparation d'un stratifié, qui comprend elle-même :
la fourniture d'un article présentant une surface microstructurée et une surface inverse ;
la fourniture d'un ruban, qui comprend lui-même :
un film polymère transparent dimensionnellement stable ayant au moins une surface traitée ;
une couche adhésive transparente sensible à la pression, appliquée au moins partiellement sur la surface traitée du film polymère transparent dimensionnellement stable ; et
une surface de décollement recouvrant la couche transparente d'adhésif sensible à la pression, cette dernière se composant d'un polymère réticulé à base de (méth)acrylate comprenant 95 à 99,5 % de monomères de (méth)acrylate d'alkyle et 0,5 à 5 % de monomères acides, et dans laquelle la couche adhésive transparente sensible à la pression a un indice de réfraction compris entre 1,45 et 1,55 ;
le retrait de la surface de décollement de la couche transparente d'adhésif sensible à la pression et la stratification du ruban sur la surface microstructurée à température ambiante ;
la stratification de la surface arrière de l'article stratifié sur un substrat multicouche à une température et une pression élevées pour former un article de sécurité, de telle sorte que la couche transparente d'adhésif sensible à la pression mouille suffisamment la surface microstructurée pour la rendre invisible à un laser d'écriture ; le découpage à l'emporte-pièce de l'article de sécurité formé ;
la personnalisation de l'article de sécurité formé ; et le retrait du ruban.

8. Méthode décrite dans la revendication 7, dans laquelle la fourniture d'un ruban comprend :
la fourniture d'un film polymère transparent dimensionnellement stable ;
le traitement d'au moins une surface du film polymère transparent dimensionnellement stable ;
la fourniture d'une couche adhésive sensible à la pression, qui comprend elle-même :
la fourniture d'une composition adhésive sensible à la pression à base de solvant ; l'application de la composition adhésive sensible à la pression à base de solvant sur une surface de décollement ; et
l'élimination du solvant du revêtement adhésif sensible à la pression ; et
la mise en contact de la couche adhésive avec la surface traitée du film polymère transparent dimensionnellement stable.

9. Méthode de préparation d'un article de sécurité comprenant :
la préparation d'un stratifié de ruban, qui comprend elle-même : la fourniture d'un article avec une surface microstructurée et une surface inverse ; la fourniture d'un ruban, ce dernier comprenant :
un film polymère transparent dimensionnellement stable ; une couche adhésive transparente sensible à la pression, appliquée au moins partiellement sur le film polymère transparent dimensionnellement stable ; et une surface de décollement recouvrant la couche transparente d'adhésif sensible à la pression, cette dernière se composant d'un polymère réticulé à base de (méth)acrylate comprenant 95 à 100 % de monomères de (méth)acrylate d'alkyle et 0 à 5 % de monomères acides, et où la couche adhésive transparente sensible à la pression a un indice de réfraction compris entre 1,45 et 1,55 ;
le retrait de la surface de décollement de la couche transparente d'adhésif sensible à la pression et la stratification du ruban sur la surface microstructurée à température ambiante ;
la stratification de la surface arrière de l'article stratifié sur un substrat multicouche à une température et une pression élevées pour former un article de sécurité, de telle sorte que la couche transparente d'adhésif sensible à la pression mouille suffisamment la surface microstructurée pour la rendre invisible à un laser d'écriture ; le découpage à l'emporte-pièce de l'article de sécurité formé ;
la personnalisation de l'article de sécurité formé ; et le retrait du ruban.

10. Méthode décrite dans la revendication 9, dans laquelle la fourniture d'un ruban comprend :
la fourniture d'un film polymère transparent dimensionnellement stable ;
l'application d'un mélange précurseur d'adhésif sur le film polymère transparent dimensionnellement stable ;
l'application d'une surface de décollement sur la couche adhésive ; et
le durcissement du mélange précurseur d'adhésif pour former une couche transparente d'adhésif sensible à la pression.

11. Méthode décrite dans la revendication 9, dans laquelle l'indice de réfraction de la couche adhésive sensible à la pression correspond à 0,05 près à l'indice de réfraction de la surface microstructurée.
